# EUROPÄISCHE PATENTANMELDUNG

(11) **EP 4 635 828 A1**
(43) Veröffentlichungstag der Anmeldung: **22.10.2025**
(21) Anmeldenummer: 25168603.6
(22) Anmeldetag: 04.04.2025
(51) Int. Cl.: B62D 5/00

(54) **HYBRIDES STEER-BY-WIRE-SYSTEM**

(30) Priorität: 15.04.2024 DE 102024110539
(71) Anmelder: Arnold NextG GmbH, 72539 Pfronstetten (DE)
(72) Erfinder: HEISS, Christoph, 86860 Jengen (DE); KAUFMANN, Oliver, 89179 Beimerstetten (DE)
(74) Vertreter: Kohler Schmid Möbus Patentanwälte

(57) **Zusammenfassung**

Die Erfindung betrifft ein Steer-by-Wire-System **1** zur Lenkung eines Kraftfahrzeugs. Das Steer-by-Wire-System 1 umfasst zwei Lenkaktoren **3, 5** zur Einstellung mindestens eines Lenkwinkels mindestens eines Rads und/oder mindestens einer Starrachse des Kraftfahrzeugs. Bei Ausfall eines der Lenkaktoren 3, 5 ist das Kraftfahrzeug weiterhin durch den weiteren der Lenkaktoren 3, 5 lenkbar. Das Steer-by-Wire-System 1 umfasst ferner eine Steuereinrichtung **7** zur Verarbeitung von Lenksignalen **LS** und Ansteuerung der Lenkaktoren 3, 5 auf Grundlage der Lenksignale LS. Einer der Lenkaktoren 3, 5 ist aus einer ersten Gattung und der weitere der Lenkaktoren 3, 5 aus einer zweiten Gattung, die sich von der ersten Gattung unterscheidet.

## Beschreibung

Die Erfindung betrifft ein Steer-by-Wire-System, eine Steuereinrichtung für ein Steer-by-Wire-System sowie ein Verfahren zur Einstellung mindestens eines Lenkwinkels mindestens eines Rads eines Kraftfahrzeugs mittels eines Steer-by-Wire-Systems.

Herkömmliche Lenksysteme für Kraftfahrzeuge weisen über die Lenksäule und das Lenkgetriebe eine direkte mechanische Kopplung zwischen dem Lenkrad und mindestens einem Rad des Kraftfahrzeugs auf. Seit längerer Zeit werden zur Unterstützung des Fahrzeugführers ferner sogenannte "Servolenkungen" eingesetzt, die mittels eines hydraulischen oder elektrischen Antriebs den vom Fahrer für die Lenkung benötigten Kraftaufwand reduzieren. Im Fall eines Ausfalls der Servolenkung kann der Fahrer das Kraftfahrzeug weiter lenken, wenn auch mit einem deutlich höheren Kraftaufwand.

Steer-by-Wire-Systeme sind Lenksysteme für Fahrzeuge, bei welchen keine direkte mechanische Kopplung besteht. Lenkeingaben werden erfasst und in Form von (typischerweise elektrischen) Lenksignalen an eine Steuereinrichtung weitergeleitet. Die Steuereinrichtung erzeugt auf dieser Basis wiederum (typischerweise elektrische) Ansteuerungssignale für einen Lenkaktor, der eine mechanische Bewegung bewirkt, mit welcher der Lenkwinkel eingestellt wird.

Steer-by-Wire-Systeme haben gegenüber konventionellen Lenksystemen eine Reihe von Vorteilen. So erlauben diese die Realisierung dynamischer Lenkungen, d. h. von Lenkungen, bei welchen der Zusammenhang zwischen der Stellung eines Lenkeingabeelements - beispielsweise eines Lenkrads - und dem Lenkwinkel nicht linear ist. Ferner ist durch die fehlende Lenksäule die Verletzungsgefahr für den Fahrzeugführer im Fall eines Unfalls reduziert. Außerdem ist die Flexibilität in der Anordnung der Lenkeingabeelemente erhöht. Besondere Bedeutung haben Steer-by-Wire-Systeme für das autonome Fahren. So müssen die Lenksignale nicht oder nicht ausschließlich von einem Lenkeingabeelement stammen, sondern können teilweise oder auch vollständig (d. h. es ist kein Lenkeingabeelement mehr vorgesehen - Stufe 5 nach SAE J3016) von einer Recheneinheit zur autonomen Steuerung erzeugt werden. Allerdings kann bei Ausfall eines Steer-by-Wire-Systems das Fahrzeug in Folge der fehlenden mechanischen Kopplung nicht mehr gelenkt werden. Um einen sicheren Betrieb zu gewährleisten, werden Steer-by-Wire-Systeme daher redundant ausgelegt. Wichtige Komponenten eines Steer-by-Wire-Systems sind doppelt oder mehrfach vorhanden, wobei bei Ausfall einer Komponente eine andere Komponente deren Rolle übernimmt.

Beispielsweise kann ein Steer-by-Wire-System zwei Lenkaktoren oder Aktorsysteme umfassen, sodass bei Ausfall eines Lenkaktors oder eines Teils seines Aktorsystems (beispielsweise einer Hydraulikpumpe) das Fahrzeug weiterhin lenkbar bleibt.

Ein Steer-by-Wire-System für ein Kraftfahrzeug ist beispielsweise in der WO 2017/198565 A1 offenbart. Das dort beschriebene Steer-by-Wire-System weist zwei Lenkaktoren auf, die zum Einstellen eines Lenkwinkels eines jeweiligen lenkbaren Rads eingerichtet sind. Eine Lenkelektronik ist dazu eingerichtet, zu erfassen, ob einer der Lenkaktoren ausgefallen ist. In diesem Fall schaltet die Lenkelektronik auf einen Notbetrieb um, in dem das Kraftfahrzeug durch den zweiten (nicht ausgefallenen) Lenkaktor eingeschränkt steuerbar bleibt.

Bei den Lenkaktoren des in der WO 2017/198565 A1 beschriebenen Steer-by-Wire-Systems handelt es sich um elektrische Stellmotoren.

Die Anwendungsbereiche elektrischer Lenkaktoren sind jedoch begrenzt. Insbesondere bei größeren Fahrzeugen sind die benötigten Leistungen so hoch, dass hierfür geeignete elektrische Lenkaktoren nur sehr selten Verwendung finden.

Als Alternative sind aus dem Stand der Technik Steer-by-Wire-Systeme bekannt, bei denen an Stelle der elektrischen Lenkaktoren hydraulische Lenkaktoren eingesetzt werden.

Allerdings sind auch hydraulische Systeme verbunden mit ihren Vorteilen nur begrenzt einsetzbar. So sind diese größer und weisen eine höhere Latenz und hohe Komplexität auf. Ferner ist ihr Wirkungsgrad geringer. Insbesondere bei Einsatz zweier unabhängiger Hydrauliksysteme sind die konstruktiven Ausgestaltungen sehr umfangreich, da sämtliche Komponenten, einschließlich beispielsweise der Hydraulikpumpe, doppelt vorhanden sein müssen.

Demgegenüber ist es **Aufgabe der Erfindung,** ein verbessertes Steer-by-Wire-System bereitzustellen, das die Handhabung des Systems erweitert.

Diese Aufgabe wird gelöst durch ein Steer-by-Wire-System zur Lenkung eines Kraftfahrzeugs, das zwei oder mehrere Lenkaktoren zur Einstellung mindestens eines Lenkwinkels mindestens eines Rads und/oder mindestens einer Starrachse des Kraftfahrzeugs aufweist, wobei bei Ausfall eines der Lenkaktoren das Kraftfahrzeug weiterhin durch einen weiteren der Lenkaktoren lenkbar ist und mindestens eine Steuereinrichtung zur Verarbeitung von Lenksignalen und Ansteuerung der Lenkaktoren auf Grundlage der Lenksignale umfasst, wobei mindestens einer der Lenkaktoren aus einer ersten Gattung und mindestens ein weiterer der Lenkaktoren aus einer zweiten Gattung ist, die sich von der ersten Gattung unterscheidet.

Bei dem Kraftfahrzeug kann es sich beispielsweise um einen Personenkraftwagen, einen Lastkraftwagen, eine Zugmaschine (Traktor) oder einen Mähdrescher handeln. Insbesondere kann es sich bei dem Kraftfahrzeug um eine Landmaschine handeln. Das Kraftfahrzeug kann beispielsweise zwei, drei, vier oder sechs Räder aufweisen, von welchen wiederum eine Teilmenge lenkbar sein kann. Das Kraftfahrzeug kann optional auch so ausgebildet sein, dass alle Räder lenkbar sind.

Bei Lenkaktoren handelt es sich um Aktoren zur Einstellung eines Lenkwinkels eines Rads. Ein Aktor ist ein technisches Element, das in Abhängigkeit eines Ansteuersignals eine mechanische Bewegung erzeugt.

Im Sinne dieser Anmeldung weisen zwei Aktoren dieselbe Gattung auf, wenn sie dieselbe Energieform nutzen und auf demselben physikalischen Effekt basieren. Nach ihrer Gattung kann man beispielsweise elektrische, hydraulische und pneumatische Aktoren voneinander unterscheiden.

Aktoren unterschiedlicher Gattung weisen unterschiedliche Vor- und Nachteile auf. In Folge der Kombination von Aktoren unterschiedlicher Gattung besteht zwischen den Lenkaktoren ein Ergänzungsverhältnis. Im Normalbetrieb, d. h. solange keiner der Lenkaktoren unterschiedlicher Gattung ausgefallen ist, können damit die Vorteile der unterschiedlichen Gattungen miteinander kombiniert und die Nachteile ausgeglichen werden. Dies setzt keinen zusätzlichen Aufwand voraus, da aufgrund der erhöhten Sicherheit sowieso zwei redundante Systeme vorgesehen sind.

Da das Steer-by-Wire-System zwei oder mehrere Lenkaktoren zur Einstellung des mindestens eines Lenkwinkels aufweist, kann bei einem Defekt eines Lenkaktors (oder mehrerer Lenkaktoren, sofern mindestens ein Lenkaktor weiter korrekt arbeitet), der betroffene Lenkaktor deaktiviert werden und das Steer-by-Wire-System ist mit dem oder den korrekt arbeitenden Lenkaktoren weiter funktionstüchtig. Das Steer-by-Wire-System ist also "fail-operational". Im Fall eines Defekts eines einem Lenkaktor zugeordneten Aktorsystems (beispielsweise eines Hydrauliksystems für einen hydraulischen Lenkaktor, das insbesondere eine Hydraulikpumpe und ein Hydraulikventil umfasst) gilt dies entsprechend.

Das Steer-by-Wire-System kann insbesondere genau eine Steuereinrichtung umfassen. Bei der mindestens einen Steuereinrichtung handelt es sich vorzugsweise um eine Electronic Control Unit (ECU). Die Steuereinrichtung kann insbesondere programmierbar sein. Sie kann Speicherelemente und einen Prozessor und/oder einen Mikrocontroller umfassen. Die Steuereinrichtung kann daneben optional weitere elektronische Bauelemente, beispielsweise einen programmierbaren Logikbaustein umfassen. Die mindestens eine Steuereinrichtung ist bevorzugt ausfallsicher ausgebildet, insbesondere kann sie einen redundanten Aufbau aufweisen.

Das Steer-by-Wire-System kann aber auch zwei oder mehrere Steuereinrichtungen umfassen. In diesem Fall sind die Steuereinrichtungen bevorzugt dazu ausgelegt, miteinander zu kommunizieren. Insbesondere können die erste Gattung von Lenkaktoren und die zweite Gattung von Lenkaktoren jeweils eine dedizierte Steuereinrichtung aufweisen.

Bevorzugt umfasst das Steer-by-Wire-System mindestens ein Lenkeingabeelement zur Erfassung von Lenkeingaben und Erzeugung entsprechender Lenksignale. Bevorzugt handelt es sich bei dem mindestens einen Lenkeingabeelement um genau ein Lenkeingabeelement. In diesem Fall ist das Lenkeingabeelement für die Bedienung durch den Fahrer vorgesehen. Das Steer-by-Wire-System kann aber beispielsweise auch zwei Lenkeingabeelemente aufweisen, wobei das zweite Lenkeingabeelement von einem Fahrlehrer bedient werden kann. Bei dem mindestens einen Lenkeingabeelement kann es sich beispielsweise um mindestens ein Lenkrad, mindestens ein Mini-Lenkrad und/oder mindestens einen Joystick handeln. Im Fall mehrerer Lenkeingabeelemente können diese auch unterschiedlicher Art sein. Beispielsweise kann das Steer-by-Wire-System ein erstes Lenkeingabeelement in Form eines Joysticks und ein zweites Lenkeingabeelement in Form eines Lenkrads umfassen. Das mindestens eine Lenkeingabeelement ist bevorzugt über redundante Kanäle (digital und/oder analog) mit der mindestens einen Steuereinrichtung verbunden, womit auch bei Ausfall eines der Kanäle das Steer-by-Wire-System weiter funktionstüchtig ist.

Die Lenksignale müssen nicht oder nicht ausschließlich von einem Lenkeingabeelement stammen, sondern können teilweise oder auch vollständig von einer Recheneinheit zur autonomen Steuerung erzeugt werden. Das Kraftfahrzeug muss also kein Lenkeingabeelement aufweisen.

Vorzugsweise kann das Steer-by-Wire-System eine Force-Feedback-Einheit umfassen, die mit dem mindestens einen Lenkeingabeelement verbunden ist. Das haptische Feedback (Force Feedback) ermöglicht es dem Fahrer, ein Gefühl für die Straßenbedingungen und die Reaktion des Fahrzeugs zu bekommen. Bevorzugt gehen in das Force-Feedback sowohl Zustandsparameter des mindestens einen Lenkaktors der ersten Gattung oder des diesem zugeordneten Aktorsystems als auch Zustandsparameter des mindestens einen Lenkaktors der zweiten Gattung oder des diesem zugeordneten Aktorsystems ein. Handelt es sich bei dem mindestens einen Lenkaktor der ersten Gattung um einen hydraulischen Lenkaktor und bei dem mindestens einen Lenkaktor der zweiten Gattung um einen elektrischen Lenkaktor, kann beispielsweise das Force-Feedback sowohl auf Basis des Drucks des Hydrauliksystems als auch auf Basis des Motorstroms erzeugt werden. Die Kombination aus beiden Quellen kann insbesondere für ein direkteres Lenkgefühl sorgen.

Die Signalübermittlung zwischen dem mindestens einen Lenkeingabeelement und der mindestens einen Steuereinrichtung sowie zwischen der mindestens einen

Steuereinrichtung und den Lenkaktoren bzw. einem zugeordneten Aktorsystem erfolgt bevorzugt mittels standardisierter Kommunikationsprotokolle. Ein Beispiel ist der CAN-Bus. Alternativ kann die Kommunikation auch über modulierte PWM-Signale (mit Rückmeldung) erfolgen.

Bevorzugt kann die mindestens eine Steuereinrichtung über Schnittstellen (insbesondere der genannten Art) Informationen von einer Vielzahl an Eingabequellen erhalten, insbesondere von Funkfernbedienungen und Systemen zur teleoperierten Steuerung sowie von Umfeldsensorik-Kits.

Das Steer-by-Wire-System kann insbesondere so ausgebildet sein, dass es nachrüstbar ist, d. h., dass ein konventionelles Lenksystem und/oder ein Steer-by-Wire-System der vorbekannten Art durch ein erfindungsgemäßes Steer-by-Wire-System ersetzbar ist.

Der mindestens eine Lenkaktor der ersten Gattung und der mindestens eine Lenkaktor der zweiten Gattung bewirken bevorzugt eine Änderung des Lenkwinkels desselben Rads des Kraftfahrzeugs. Der mindestens eine Lenkaktor der ersten Gattung und der mindestens eine Lenkaktor der zweiten Gattung können insbesondere gleichzeitig aktiv sein, also gleichzeitig eine Änderung des Lenkwinkels bewirken. Aber auch ein Einsatz nur einer Gattung zu einem gegebenen Zeitpunkt ist möglich. Auch eine Kombination dieser Ansätze ist möglich, d. h. eine Lenkung, bei der zu manchen Zeitpunkten der mindestens eine Lenkaktor der ersten Gattung und der mindestens eine Lenkaktor der zweiten Gattung gleichzeitig aktiv sind, während zu anderen Zeitpunkten nur der mindestens eine Lenkaktor der ersten Gattung oder nur der mindestens eine Lenkaktor der zweiten Gattung aktiv ist.

Sind Lenkaktoren beider Gattungen gleichzeitig aktiv, so können diese so angesteuert werden, dass sie in unterschiedlichem Ausmaß auf den Lenkwinkel einwirken. Die Lenkaktoren welcher Gattung aktiv sind (oder die vorrangig angesteuert werden, wenn beide Gattungen aktiv sind), kann von einer ganzen Reihe von Größen, insbesondere von der Fahrsituation, den Lenksignalen, dem Zustand der Lenkaktoren, der Größe von Abweichungen im Regelkreis und/oder der Art des Kraftfahrzeugs abhängen.

Bevorzugt sind Lenkaktoren einer der Gattungen schneller und/oder präziser, während Lenkaktoren der anderen Gattung eine höhere Stellkraft bereitstellen. Eine höhere Stellkraft ermöglicht insbesondere auch eine größere Änderung des Lenkwinkels in einer gegebenen Zeit. Durch den kombinierten Einsatz von Lenkaktoren der beiden Gattungen weist das Steer-by-Wire-System die Vorteile beider Gattungen auf, d. h. es ist nicht nur schnell und/oder präzise, sondern weist auch eine hohe Stellkraft zur Einstellung des mindestens einen Lenkwinkels auf.

Das Steer-by-Wire-System umfasst bevorzugt mindestens einen Sensor für die Lenkwinkelmessung, der mit der mindestens einen Steuereinrichtung verbunden ist, wodurch ein Regelkreis gebildet wird. Besonders bevorzugt handelt es sich um mehrere Sensoren zur Lenkwinkelmessung und/oder mindestens einen redundant ausgebildeten Sensor. Hierdurch wird die Lenkung präzisiert und die Rückmeldung an die mindestens eine Steuereinrichtung verlässlicher. Der mindestens eine Sensor für die Lenkwinkelmessung ist bevorzugt in das äußere Drehgelenk oder, im Fall eines elektrischen Lenkaktors, in diesen integriert.

Mit Drehgelenk ist der Drehpunkt des Rades gemeint. Dieses Drehgelenk "verbindet" den Achsschenkel mit der Achse.

Schließlich ist die mindestens eine Steuereinrichtung vorzugsweise so konfiguriert, dass in einem Hydrauliksystem eines hydraulischen Lenkaktors des Steer-by-Wire-Systems der Druck begrenzt ist, wobei die Grenze mit steigender Fahrgeschwindigkeit absinkt. Der Druck soll bei steigender Fahrgeschwindigkeit verringert werden, da bei höheren Geschwindigkeiten geringere Lenkwinkel umgesetzt werden müssen.

In einer Ausführungsform ist mindestens einer der Lenkaktoren ein elektrischer Lenkaktor. Elektrische Lenkaktoren, beispielsweise in Form von elektrischen Stellmotoren, zeichnen durch eine geringe Latenz sowie ihre hohe Präzision aus. Insbesondere kann bei Verwendung eines elektrischen Lenkaktors die Latenz des Steer-by-Wire-Systems im Anlenkverhalten gering sein. Die hohe Genauigkeit ist insbesondere auch für das autonome Fahren relevant.

In einer Ausführungsform ist mindestens einer der Lenkaktoren ein hydraulischer Lenkaktor. Hydraulische Lenkaktoren zeichnen sich durch ihre hohe Stellkraft aus. Hohe Lasten auf der Vorderachse (im Beispiel Landwirtschaft z. B. Frontladertätigkeiten) werden hohe Lenkleistungen notwendig. Diese können vom Hydrauliksystem bereitgestellt werden. Im Fall eines Defekts des hydraulischen Lenkaktors oder des zugeordneten Hydrauliksystems kann das Hydrauliksystem bevorzugt in einen drucklosen Zustand versetzt werden (beispielsweise mittels der mindestens einen Steuereinrichtung), was einer Blockierung der Lenkmechanik verhindert.

In einer Ausführungsform ist mindestens einer der Lenkaktoren ein pneumatischer Lenkaktor. Auch pneumatische Lenkaktoren verfügen über eine relativ hohe Stellkraft. Diese ist jedoch typischerweise geringer als bei hydraulischen Lenkaktoren. Pneumatische Lenkaktoren sind erschütterungsfest, langlebig, wartungsfrei und sind im Gegensatz zu elektrischen Antrieben aus wenigen Bauteilen aufgebaut und dadurch kaum störungsanfällig.

In einer Ausführungsform ist mindestens einer Lenkaktoren ein hydraulischer Lenkaktor und mindestens ein weiterer der Lenkaktoren ein elektrischer Lenkaktor.

In einer Ausführungsform ist mindestens einer Lenkaktoren ein pneumatischer Lenkaktor und mindestens ein weiterer der Lenkaktoren ein elektrischer Lenkaktor.

Alternativ kann mindestens einer der Lenkaktoren ein hydraulischer Lenkaktor und mindestens ein weiterer der Lenkaktoren ein pneumatischer Lenkaktor sein. In einer Ausführungsform umfasst das Steer-by-Wire-System zusätzlich mindestens einen Sensor zur Überwachung mindestens eines der Lenkaktoren und/oder eines diesem zugeordneten Aktorsystems und Bereitstellung eines resultierenden Sensorsignals.

Der mindestens eine Sensor kann insbesondere zur Überwachung des Drucks und/oder der Temperatur eines Hydrauliksystems eines hydraulischen Lenkaktors dienen. Alternativ oder zusätzlich kann der mindestens eine Sensor zur Überwachung einer Leistungselektronik eines elektrischen Lenkaktors oder eines elektrischen Lenkaktors selbst dienen (beispielsweise handelt es sich dann um einen Strom- oder Temperatursensor).

Das Sensorsignal kann dann zur Deaktivierung des betroffenen Lenkaktors oder bevorzugten Verwendung eines anderen Lenkaktors durch die mindestens eine Steuereinrichtung herangezogen werden.

In einer Ausführungsform ist die mindestens eine Steuereinrichtung konfiguriert, die Lenkaktoren derart anzusteuern, dass das Verhältnis des Anteils, in dem der mindestens eine Lenkaktor der ersten Gattung auf den Lenkwinkel einwirkt, zu dem Anteil, in dem der mindestens eine Lenkaktor der zweiten Gattung auf den Lenkwinkel einwirkt, von der Fahrsituation abhängt.

Die Fahrsituation bestimmt sich insbesondere durch die Geschwindigkeit und/oder die Fahrbahnoberfläche (welche durch ein Navigationssystem und/oder eine geeignete Sensorik ermittelbar ist) und/oder dadurch, ob das Kraftfahrzeug eine Kurve durchfährt sowie deren Radius (was beispielsweise ebenfalls mittels eines Navigationssystems und/oder mittels Sensoren, beispielsweise mittels Beschleunigungssensoren, ermittelbar ist).

Bevorzugt zeichnet sich dabei die erste Gattung durch eine höhere Stellkraft, die zweite Gattung durch eine geringere Latenz und/oder eine höhere Präzision aus.

Vorzugsweise erfolgt die Einstellung des Lenkwinkels bei niedrigen Geschwindigkeiten dann überwiegend oder vollständig mittels des mindestens einen Lenkaktors der ersten Gattung während bei niedrigen Geschwindigkeiten die Lenkung überwiegend oder vollständig mittels des mindestens einen Lenkaktors der zweiten Gattung erfolgt.

Die Geschwindigkeitsgrenze ist typischerweise von der Art des Kraftfahrzeugs abhängig. Bei Landmaschinen kann diese bevorzugt bei 40 km/h oder 50 km/h liegen.

Bei der ersten Gattung kann es sich bevorzugt um hydraulische Aktoren und bei der zweiten Gattung um elektrische Aktoren handeln. Insbesondere wird bei niedrigen Geschwindigkeiten hauptsächlich die hydraulische Leistungsquelle verwendet, da bei langsamer Fahrt die Präzision der Lenkung weniger kritisch ist.

Die Hydraulik ermöglicht die höheren Lenkkräfte und die größeren Winkeländerungen, insbesondere beim Rangieren. Bei höheren Geschwindigkeiten ist bevorzugt die elektrische Lenkung dominanter, da diese typischerweise schneller reagieren und präzisere Anpassungen ermöglichen kann, was bei höheren Geschwindigkeiten von Vorteil ist. Große Lenkwinkel und schnelle Lenkwinkeländerungen (wie sie die Hydraulik ermöglichen würde) sind bei hohen Geschwindigkeiten aus Sicherheitsgründen typischerweise nicht gewünscht.

In einer Ausführungsform ist die mindestens eine Steuereinrichtung konfiguriert, die Lenkaktoren derart anzusteuern, dass das Verhältnis des Anteils, in dem der mindestens eine Lenkaktor der ersten Gattung auf den Lenkwinkel einwirkt, zu dem Anteil, in dem der mindestens eine Lenkaktor der zweiten Gattung auf den Lenkwinkel einwirkt, von den Lenksignalen abhängt.

Diese Ausführungsform ist insbesondere mit der vorgenannten Ausführungsform kombinierbar, d. h. das Verhältnis des Anteils, in dem der mindestens eine Lenkaktor der ersten Gattung auf den Lenkwinkel einwirkt, zu dem Anteil, in dem der mindestens eine Lenkaktor der zweiten Gattung auf den Lenkwinkel einwirkt, kann sowohl von der Fahrsituation als auch von den Lenksignalen abhängen. Bevorzugt zeichnet sich die erste Gattung durch eine höhere Stellkraft (beispielsweise hydraulische Lenkaktoren), die zweite Gattung durch eine geringere Latenz und/oder eine höhere Präzision aus (beispielsweise elektrische Lenkaktoren). Vorzugsweise erfolgt bei Lenksignalen, die eine große Änderung des Lenkwinkels repräsentieren, die Einstellung des Lenkwinkels überwiegend oder vollständig durch den mindestens einen Lenkaktor der ersten Gattung, bei Lenksignalen, die eine kleine Änderung des Lenkwinkels repräsentieren hingegen überwiegend oder vollständig durch den mindestens einen Lenkaktor der zweiten Gattung.

Für feine oder geringfügige Lenkmanöver wird also insbesondere die elektrische Leistung bevorzugt, da sie eine feinere Kontrolle und schnelle Reaktionsfähigkeit bietet. Bei erheblichen Lenkbewegungen oder wenn eine schnelle Anpassung erforderlich ist, wird vorzugsweise die hydraulische Kraft genutzt.

In einer Ausführungsform umfasst das Steer-by-Wire-System zusätzlich mindestens einen Sensor zur Erfassung mindestens eines Zustandsparameters des mindestens einen Lenkaktors der ersten Gattung und/oder eines diesem zugeordneten Aktorsystems, wobei die mindestens eine Steuereinrichtung konfiguriert ist, die Lenkaktoren derart anzusteuern, dass das Verhältnis des Anteils, in dem der mindestens eine Lenkaktor der ersten Gattung auf den Lenkwinkel einwirkt, zu dem Anteil, in dem der mindestens eine Lenkaktor der zweiten Gattung auf den Lenkwinkel einwirkt, von dem erfassten Wert des mindestens einen Zustandsparameters abhängt.

Die Steuereinrichtung kann insbesondere zur lastabhängigen Ansteuerung ausgebildet sein. Insbesondere können Lenkaktoren der ersten Gattung eine höhere Stellkraft als Lenkaktoren der zweiten Gattung aufweisen. Vorzugsweise erfolgt bei einer geringen Last die Einstellung des Lenkwinkels dann überwiegend oder vollständig durch den mindestens einen Lenkaktor der zweiten Gattung, während bei einer hohen Last die Einstellung des Lenkwinkels überwiegend oder vollständig durch den mindestens einen Lenkaktor der ersten Gattung erfolgt. Der Zustandsparameter kann insbesondere der Motorstrom eines elektrischen Lenkaktors sein. Der Motorstrom des (wegen seiner geringen Latenz zuerst ansprechenden) elektrischen Lenkaktors ist ein Indikator für die Last.

Insbesondere kann bei geringer Last eine geringe hydraulische Unterstützung erfolgen. Bei hoher Last (schnelle und starke Anstiege des Motorstroms) erfolgt hingegen bevorzugt eine hohe hydraulische Unterstützung (da von einem hohen Leistungsbedarf ausgegangen wird).

In einer Ausführungsform umfasst das Steer-by-Wire-System zusätzlich mindestens einen Sensor zur Erfassung mindestens eines Istwerts des mindestens eines Lenkwinkels, wobei die mindestens eine Steuereinrichtung so konfiguriert ist, dass das Verhältnis des Anteils, in dem der mindestens eine Lenkaktor der ersten Gattung auf den Lenkwinkel einwirkt, zu dem Anteil, in dem der mindestens eine Lenkaktor der zweiten Gattung auf den Lenkwinkel einwirkt, von einer Abweichung des Istwerts des mindestens einen Lenkwinkels von einem entsprechenden Sollwert abhängt.

Insbesondere können Lenkaktoren der ersten Gattung eine höhere Stellkraft als Lenkaktoren der zweiten Gattung aufweisen. Bei starken oder signifikanten Abweichungen des Istwerts vom Sollwerts des Lenkwinkels, wird bevorzugt teilweise, besonders bevorzugt überwiegend, ganz besonders bevorzugt vollständig der mindestens eine Lenkaktor der ersten Gattung (beispielsweise mindestens ein hydraulischer Lenkaktor) eingesetzt, um eine schnellere Anpassung an den Sollwert zu erreichen.

Bevorzugt können die vorgenannten Ausführungsformen kombiniert werden. Das Verhältnis des Anteils, in dem der mindestens eine Lenkaktor der ersten Gattung auf den Lenkwinkel einwirkt, zu dem Anteil, in dem der mindestens eine Lenkaktor der zweiten Gattung auf den Lenkwinkel einwirkt, kann also von der Fahrsituation und/oder von den Lenksignalen und/oder von dem erfassten Wert des mindestens einen Zustandsparameters und/oder von einer Abweichung des Istwerts des mindestens einen Lenkwinkels von einem entsprechenden Sollwert abhängen.

Ein weiterer Aspekt der Erfindung betrifft eine Steuereinrichtung für ein Steer-by-Wire-System, die konfiguriert ist, Lenksignale zu empfangen und auf Grundlage dieser Lenksignale mindestens einen Lenkaktors einer ersten Gattung und mindestens einen Lenkaktors einer zweiten Gattung anzusteuern, wobei sich die zweite Gattung von der ersten Gattung unterscheidet.

Bevorzugt kann die Steuereinrichtung ausgebildet sein, wie oben im Zusammenhang mit dem Steer-by-Wire-System ausgeführt.

Ein weiterer Aspekt der Erfindung betrifft ein Verfahren zur Einstellung mindestens eines Lenkwinkels mindestens eines Rads eines Kraftfahrzeugs mittels eines Steer-by-Wire-Systems, das die Schritte umfasst: Bereitstellen von Lenksignalen sowie Ansteuern mindestens eines Lenkaktors einer ersten Gattung und mindestens eines Lenkaktors einer zweiten Gattung auf Grundlage der Lenksignale, wobei sich die zweite Gattung von der ersten Gattung unterscheidet.

Bevorzugt kann dabei das Verfahren so ausgestaltet sein, wie oben im Zusammenhang mit dem Steer-by-Wire-System ausgeführt.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebiger Kombination Verwendung finden. Die gezeigten und beschriebenen Ausführungsformen sind nicht als abschließende Aufzählung zu verstehen, sondern haben vielmehr beispielhaften Charakter für die Erläuterung der Erfindung.

Die Erfindung ist auch im Zusammenhang mit einer Knicklenkung umsetzbar. Sie setzt voraus, dass ein zwei- oder mehrachsiges Fahrzeug aus mindestens zwei Teilen besteht, die mit einem Gelenk verbunden sind. Die Radachsen sind starr in den Teilkörpern gelagert. Eine Richtungsänderung erfolgt durch horizontales Verschwenken der Fahrzeugteile.

Es zeigen:
- Fig. 1: eine schematische Darstellung eines erfindungsgemäßen Steer-by-Wire-Systems;
- Fig. 2: eine Illustration des dem erfindungsgemäßen Steer-by-Wire-Systems zugrundliegenden Regelkreises;
- Fig. 3a - 3n: Detaildarstellungen der Anordnung der Lenkaktoren eines erfindungsgemäßen Steer-by-Wire-Systems.
In der folgenden Beschreibung der Zeichnung werden für gleiche bzw. funktionsgleiche Bauteile identische Bezugszeichen verwendet.

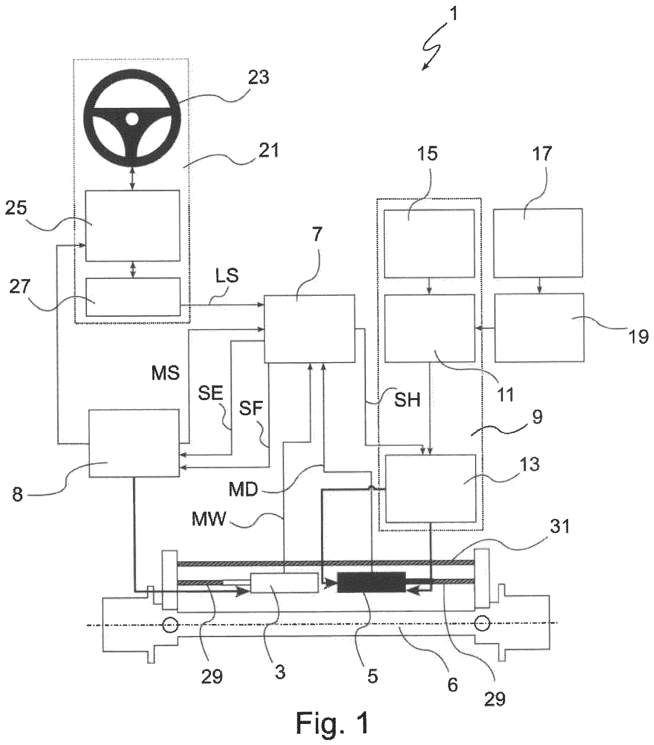

In **Figur 1** ist ein Steer-by-Wire-System **1** zur Lenkung eines Kraftfahrzeugs dargestellt.

Das Steer-by-Wire-System 1 umfasst zwei Lenkaktoren **3, 5** zur Einstellung mindestens eines Lenkwinkels mindestens eines Rads des Kraftfahrzeugs. Bei Ausfall eines der Lenkaktoren 3, 5 ist das Kraftfahrzeug weiterhin durch den weiteren der Lenkaktoren 3, 5 lenkbar. Aus Gründen der leichteren Darstellbarkeit ist vorliegend nur eine Achse **6** des Kraftfahrzeugs dargestellt. Die Räder selbst sind nicht gezeigt. Das Steer-by-Wire-System 1 kann auch mehr als zwei Lenkaktoren umfassen.

Das Steer-by-Wire-System 1 umfasst ferner eine Steuereinrichtung **7** zur Verarbeitung von Lenksignalen **LS** und Ansteuerung der Lenkaktoren 3, 5 auf Grundlage der Lenksignale LS.

Einer der Lenkaktoren 3, 5 ist aus einer ersten Gattung und der weitere der Lenkaktoren 3, 5 aus einer zweiten Gattung, die sich von der ersten Gattung unterscheidet. Konkret handelt es sich beispielhaft aber nicht notwendigerweise bei den Lenkaktoren 3, 5 um einen elektrischen Lenkaktor 3 und einen hydraulischen Lenkaktor 5.

Der elektrische Lenkaktor 3 weist ein zugeordnetes Aktorsystem auf, das eine Leistungselektronik 8 umfasst.

Der hydraulische Lenkaktor 5 weist ein zugeordnetes Aktorsystem in Form eines Hydrauliksystems 9 auf, das eine Hydraulikpumpe **11,** ein Hydraulikventil **13** und einen Öltank **15** umfasst. Das Hydrauliksystem 9 kann insbesondere vom Motor **17** des Kraftfahrzeugs über ein Getriebe **19** mit Energie versorgt werden.

Das dargestellte Steer-by-Wire-System 1 weist ferner ein
Lenkeingabeelement **21** auf, das jedoch kein notwendiger Bestandteil ist. Im gezeigten Beispiel umfasst das Lenkeingabeelement 21 ein Lenkrad **23** sowie eine Force-Feedback-Einheit **25** (die über die Leistungselektronik 8 angesteuert wird) und einen Encoder **27.** Lenksignale LS des Lenkeingabeelements 21 werden an die Steuereinrichtung 7 weitergeleitet.

Die Steuereinrichtung 7 erzeugt zur Ansteuerung der Lenkaktoren 3, 5 entsprechende Ansteuersignale **SE, SH,** die an die Leistungselektronik 8 bzw. das Hydraulikventil 13 weitergeleitet werden. Zur Ansteuerung der Force-Feedback-Einheit 25 erzeugt die Steuereinrichtung ferner Force-Feedback-Ansteuersignale **SF.**

Die Lenkaktoren 3, 5 sind im gezeigten Beispiel auf gegenüberliegenden Seiten der Achse 6, also jeweils bei einem Rad der Achse 6 angeordnet und weisen zur Einstellung des Lenkwinkels kurze Koppelstangen **29** auf. Ferner sind beide Seiten mit einer weiteren Koppelstange **31** verbunden, sodass beide Lenkaktoren 3, 5 jeweils auf die Lenkwinkel beider Räder einwirken.

Das Steer-by-Wire-System 1 umfasst des Weiteren einen hier nicht dargestellten Sensor zur Überwachung des hydraulischen Lenkaktors 5 durch Messung des Drucks **MD.** Das entsprechende Sensorsignal wird an die Steuereinrichtung 7 weitergeleitet.

Ferner umfasst das Steer-by-Wire-System 1 einen hier nicht dargestellten Lenkwinkelsensor zur Erfassung des Istwerts **MW** des mindestens eines Lenkwinkels, der an die Steuereinrichtung 7 weitergeleitet wird.

Schließlich umfasst das Steer-by-Wire-System 1 einen hier nicht dargestellten Sensor zur Erfassung des Werts **MS** eines Zustandsparameters in Form des Motorstroms des elektrischen Lenkaktors 3 der an die Steuereinrichtung 7 weitergeleitet wird.

Die Steuereinrichtung 1 ist beispielhaft konfiguriert, die Lenkaktoren 3, 5 derart anzusteuern, dass das Verhältnis des Anteils, in dem der Lenkaktor 5 der ersten Gattung auf den Lenkwinkel einwirkt, zu dem Anteil, in dem der Lenkaktor 3 der zweiten Gattung auf den Lenkwinkel einwirkt, von der Fahrsituation abhängt. Alternativ oder zusätzlich kann die Steuereinrichtung 1 konfiguriert sein, die Lenkaktoren 3, 5 derart anzusteuern, dass das Verhältnis des Anteils, in dem der Lenkaktor 5 der ersten Gattung auf den Lenkwinkel einwirkt, zu dem Anteil, in dem der Lenkaktor 3 der zweiten Gattung auf den Lenkwinkel einwirkt, von den Lenksignalen LS und/oder dem erfassten Wert des Zustandsparameters MS und/oder von der Abweichung des Istwerts MW des mindestens einen Lenkwinkels von einem entsprechenden Sollwert abhängt.

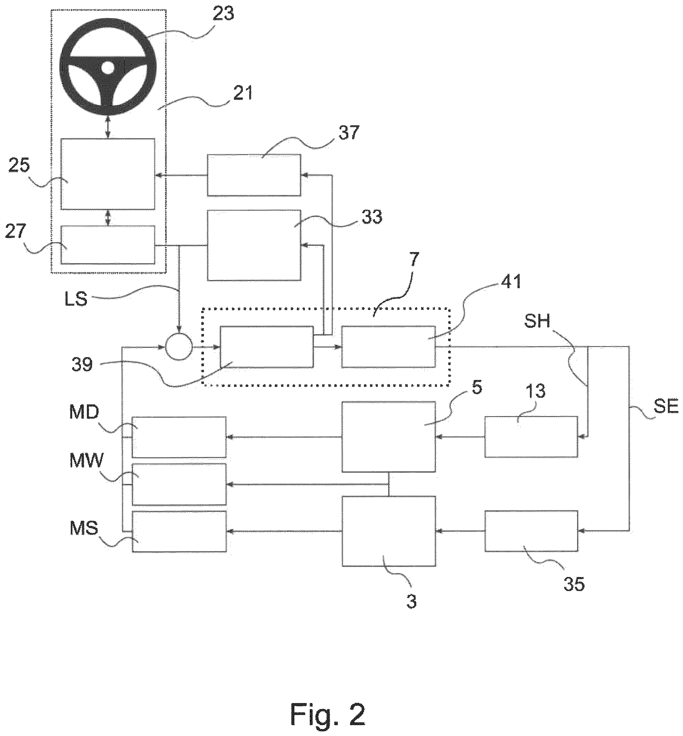

In **Figur 2** ist der dem erfindungsgemäßen Steer-by-Wire-System 1 zugrundliegende Regelkreis illustriert.

Im Unterschied zu Figur 1 weist das Steer-by-Wire-System 1 eine Recheneinheit **33** zur autonomen Steuerung auf, sodass die Lenksignale LS (hier Lenkwinkelvorgaben) auch von dieser und nicht nur vom Lenkeingabeelement 21 stammen.

Dargestellt sind ferner der Motorcontroller **35** des elektrischen Lenkaktors 3, sowie der Motorcontroller **37** der Force-Feedback-Einheit 25.

Die Istwerte der im gezeigten Beispiel geregelten Größe ist der gemessene Druck MD des hydraulischen Lenkaktors 5. Außerdem werden der erfasste Wert MW des Lenkwinkels und der erfasste Wert MS des Motorstroms des elektrischen Lenkaktors 3 weitergeleitet. Die Ansteuerungssignale SE, SH entsprechen hier Stromvorgaben für den Motorstrom bzw. Öffnungsvorgaben für das Hydraulikventil 13. Geregelt wird der Lenkwinkel. Der Lenkwinkel stellt sich durch die zwei Stellgrößen Motorstrom und Öffnungsvorgabe des Ventils ein.

Gezeigt sind ferner ein Force-Feedback-Regler **39,** sowie ein Leitwinkelregler **41** als Teil der Steuereinrichtung 7.

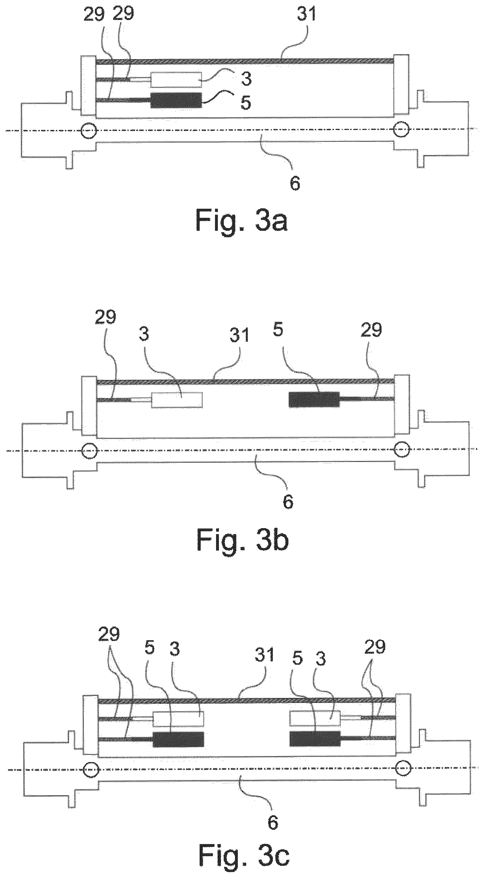

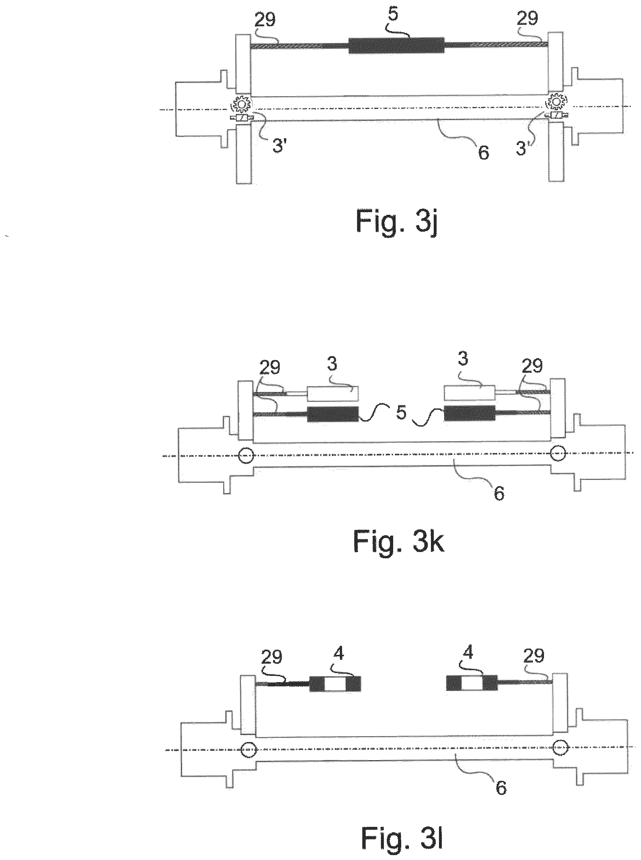

Bei den **Figuren 3a - 3n** handelt es sich um Detaildarstellungen, die Varianten der Anbringung der Lenkaktoren des erfindungsgemäßen Steer-by-Wire-Systems illustrieren, dessen weitere Komponenten hier nicht gezeigt sind. Gezeigt ist eine Achse 6 des Kraftfahrzeugs an deren beiden Enden hier nicht dargestellte Räder angeordnet sind.

In Fig. 3a umfasst das Steer-by-Wire-System einen elektrischen Lenkaktor 3 und einen hydraulischen Lenkaktor 5. Die Lenkaktoren 3, 5 sind im gezeigten Beispiel auf derselben Seite der Achse 6 angeordnet und weisen zur Einstellung des Lenkwinkels kurze Koppelstangen 29 auf. Ferner sind beide Seiten mit einer weiteren Koppelstange 31 verbunden, sodass beide Lenkaktoren 3, 5 jeweils auf die Lenkwinkel beider Räder einwirken. Die Konfiguration ist kompakt und ermöglicht eine effiziente Steuerung.

In Fig. 3b umfasst das Steer-by-Wire-System einen elektrischen Lenkaktor 3 und einen hydraulischen Lenkaktor 5. In Fig. 3a umfasst das Steer-by-Wire-System einen elektrischen Lenkaktor 3 und einen hydraulischen Lenkaktor 5. Die Lenkaktoren 3, 5 sind im gezeigten Beispiel auf derselben Seite der Achse 6 angeordnet und weisen zur Einstellung des Lenkwinkels kurze Koppelstangen 29 auf. Ferner sind beide Seiten mit einer weiteren Koppelstange 31 verbunden, sodass beide Lenkaktoren 3, 5 jeweils auf die Lenkwinkel beider Räder einwirken.

In Fig. 3c umfasst das Steer-by-Wire-System zwei elektrische Lenkaktoren 3 und zwei hydraulische Lenkaktoren 5. Auf jeder Seite der Achse 6 sind jeweils ein elektrischer Lenkaktor 3 und ein hydraulischer Lenkaktor angeordnet, die zur Einstellung des Lenkwinkels kurze Koppelstangen 29 aufweisen. Ferner sind beide Seiten mit einer weiteren Koppelstange 31 verbunden, sodass jedes Paar von Lenkaktoren 3, 5 jeweils auf die Lenkwinkel beider Räder einwirkt. Die Redundanz des Systems ist bei dieser Konfiguration erhöht.

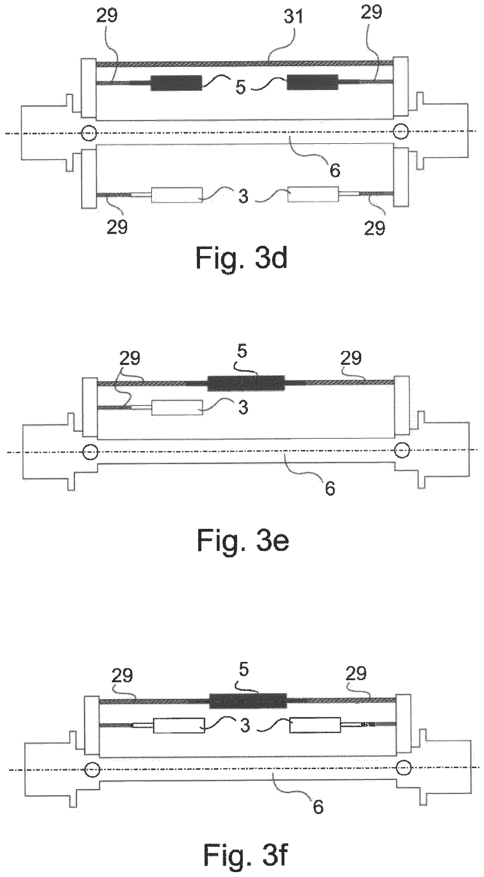

In Fig. 3d umfasst das Steer-by-Wire-System zwei elektrische Lenkaktoren 3 und zwei hydraulische Lenkaktoren 5. Auf jeder Seite der Achse 6 sind jeweils ein elektrischer Lenkaktor 3 und ein hydraulischer Lenkaktor angeordnet, die zur Einstellung des Lenkwinkels kurze Koppelstangen 29 aufweisen. Ferner sind beide Seiten mit einer weiteren Koppelstange 31 verbunden, sodass jedes Paar von Lenkaktoren 3, 5 jeweils auf die Lenkwinkel beider Räder einwirkt. Anders als in Fig. 3c ist die Anordnung bezüglich der Achse 6 spiegelsymmetrisch unter Vertauschung der Gattung.

Zur Nutzung des Verbauungsraums können die Komponenten der Erfindung auch sich gegenüberliegend angeordnet sein.

In Fig. 3e umfasst das Steer-by-Wire-System einen elektrischen Lenkaktor 3 und einen hydraulischen Lenkaktor 5. Der elektrische Lenkaktor 3 ist im gezeigten Beispiel auf einer Seite der Achse 6 angeordnet und weist zur Einstellung des Lenkwinkels eine kurze Koppelstange 29 auf. Der hydraulische Lenkaktor 5 ist über Koppelstangen 29 mit beiden Seiten verbunden.

Die Anordnung in Fig. 3f entspricht der Anordnung in Fig. 3e, wobei zusätzlich ein weiterer elektrischer Lenkaktor 3 vorgesehen ist, der auf der gegenüberliegenden Seite angeordnet ist.

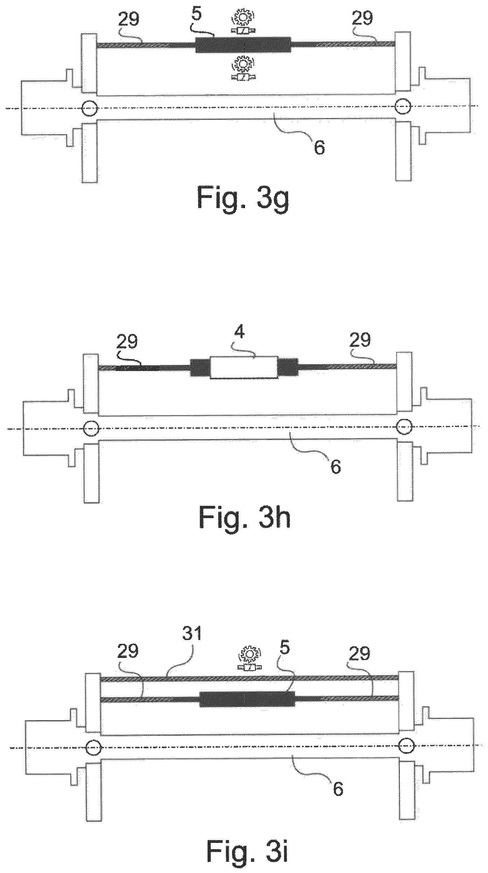

In Fig. 3g umfasst das Steer-by-Wire-System einen hydraulischen Lenkaktor 5, der über Koppelstangen 29 mit beiden Seiten verbunden ist. Der hydraulische Lenkaktor 5 weist zusätzlich ein Schneckengetriebe, das von einem weiteren Aktor angetrieben wird, und/oder einen integrierten Spindelantrieb auf.

In Fig. 3h umfasst das Steer-by-Wire-System einen Hybridaktor 4 in Form eines Hydraulikzylinders mit integriertem Elektromotor. Ein Hybridaktor, wie der hier dargestellte, umfasst damit zwei Aktoren unterschiedlicher Gattung. Zur Einstellung des Lenkwinkels weist der Hybridaktor 4 auf beiden Seiten jeweils eine kurze Koppelstange 29 auf.

In Fig. 3i umfasst das Steer-by-Wire-System einen hydraulischen Lenkaktor 5, der über Koppelstangen 29 mit beiden Seiten verbunden ist. An einer weiteren Koppelstange 31 kann ferner ein Elektromotor als weiterer Lenkaktor auf unterschiedliche Weise mechanisch angebracht werden. Diese Konfiguration erlaubt eine flexible Anpassung des elektrischen Antriebs an die spezifischen Bedürfnisse des Lenksystems, einschließlich der Integration mit Zahnstangen- oder Kugelumlaufkopplungen für eine präzise Übertragung der Lenkbewegungen.

In Fig. 3j umfasst das Steer-by-Wire-System einen hydraulischen Lenkaktor 5, der über Koppelstangen 29 mit beiden Seiten verbunden ist. Ein Elektromotor **3'** ist als Aktor im Achsschenkel oder über Zahnrad und Drehteller verbunden. Diese Konfiguration ermöglicht eine präzise und direkte Steuerung der Radstellung, was die Lenkpräzision und das Ansprechverhalten des Kraftfahrzeugs verbessert. In den Figuren 3k - 3n ist das Steer-by-Wire-System als Einzelradlenkung ausgebildet.

In Fig. 3k umfasst das Steer-by-Wire-System zwei elektrische Lenkaktoren 3 und zwei hydraulische Lenkaktoren 5. Auf jeder Seite der Achse 6 sind jeweils eine elektrischer Lenkaktor und ein hydraulischer Lenkaktor angeordnet.

In Fig. 3I umfasst das Steer-by-Wire-System zwei Hybridaktoren 4, wobei auf jeder Seite einer der Hybridaktoren 4 angeordnet ist.

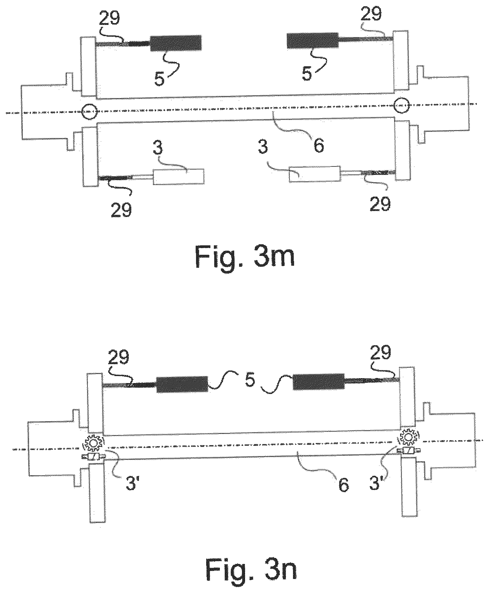

In Fig. 3m ist eine Variante der in Fig. 3k gezeigten Anordnung für die Einzelradlenkung gezeigt.

In Fig. 3n weist das Steer-by-Wire-System zwei hydraulische Lenkaktoren 5 auf, von welchen auf jeder Seite ein Lenkaktor 5 angeordnet ist. In den Achsschenkeln sind ferner zwei weitere Antriebseinheiten 3' angeordnet.

In den Figuren 3a - 3n kann es sich anstelle der hydraulischen Lenkaktoren und der elektrischen Lenkaktoren auch allgemein um Lenkaktoren aus einer ersten Gattung bzw. Lenkaktoren aus einer zweiten Gattung handeln.

## Patentansprüche

1. Steer-by-Wire-System zur Lenkung eines Kraftfahrzeugs, umfassend zwei oder mehrere Lenkaktoren zur Einstellung mindestens eines Lenkwinkels mindestens eines Rads und/oder mindestens einer Starrachse des Kraftfahrzeugs, wobei bei Ausfall eines der Lenkaktoren das Kraftfahrzeug weiterhin durch einen weiteren der Lenkaktoren lenkbar ist, und
mindestens eine Steuereinrichtung zur Verarbeitung von Lenksignalen und Ansteuerung der Lenkaktoren auf Grundlage der Lenksignale, **dadurch gekennzeichnet,**
**dass** mindestens einer der Lenkaktoren aus einer ersten Gattung und mindestens ein weiterer der Lenkaktoren aus einer zweiten Gattung ist, die sich von der ersten Gattung unterscheidet.

2. Steer-by-Wire-System nach Anspruch 1, **dadurch gekennzeichnet, dass** mindestens einer der Lenkaktoren ein elektrischer Lenkaktor ist.

3. Steer-by-Wire-System nach Anspruch 1 oder 2, **dadurch gekennzeichnet, dass** mindestens einer der Lenkaktoren ein hydraulischer Lenkaktor ist.

4. Steer-by-Wire-System nach einem der Ansprüche 1 bis 3, **dadurch gekennzeichnet, dass** mindestens einer der Lenkaktoren ein pneumatischer Lenkaktor ist.

5. Steer-by-Wire-System nach Anspruch 1, **dadurch gekennzeichnet, dass** mindestens einer der Lenkaktoren ein hydraulischer Lenkaktor und mindestens ein weiterer der Lenkaktoren ein elektrischer Lenkaktor ist.

6. Steer-by-Wire-System nach Anspruch 1, **dadurch gekennzeichnet, dass** mindestens einer der Lenkaktoren ein pneumatischer Lenkaktor und mindestens ein weiterer der Lenkaktoren ein elektrischer Lenkaktor ist.

7. Steer-by-Wire-System nach einem der Ansprüche 1 bis 6, zusätzlich umfassend mindestens einen Sensor zur Überwachung mindestens eines der Lenkaktoren und/oder eines diesem zugeordneten Aktorsystems und Bereitstellung eines resultierenden Sensorsignals.

8. Steer-by-Wire-System nach einem der Ansprüche 1 bis 7, **dadurch gekennzeichnet, dass** die mindestens eine Steuereinrichtung konfiguriert ist, die Lenkaktoren derart anzusteuern, dass das Verhältnis des Anteils, in dem der mindestens eine Lenkaktor der ersten Gattung auf den Lenkwinkel einwirkt, zu dem Anteil, in dem der mindestens eine Lenkaktor der zweiten Gattung auf den Lenkwinkel einwirkt, von der Fahrsituation abhängt.

9. Steer-by-Wire-System nach einem der Ansprüche 1 bis 8, **dadurch gekennzeichnet, dass** die mindestens eine Steuereinrichtung konfiguriert ist, die Lenkaktoren derart anzusteuern, dass das Verhältnis des Anteils, in dem der mindestens eine Lenkaktor der ersten Gattung auf den Lenkwinkel einwirkt, zu dem Anteil, in dem der mindestens eine Lenkaktor der zweiten Gattung auf den Lenkwinkel einwirkt, von den Lenksignalen abhängt.

10. Steer-by-Wire-System nach einem der Ansprüche 1 bis 9, zusätzlich umfassend mindestens einen Sensor zur Erfassung mindestens eines Zustandsparameters des mindestens einen Lenkaktors der ersten Gattung und/oder eines diesem zugeordneten Aktorsystems, wobei die mindestens eine Steuereinrichtung konfiguriert ist, die Lenkaktoren derart anzusteuern, dass das Verhältnis des Anteils, in dem der mindestens eine Lenkaktor der ersten Gattung auf den Lenkwinkel einwirkt, zu dem Anteil, in dem der mindestens eine Lenkaktor der zweiten Gattung auf den Lenkwinkel einwirkt, von dem erfassten Wert des mindestens einen Zustandsparameters abhängt.

11. Steer-by-Wire-System nach einem der Ansprüche 1 bis 10, zusätzlich umfassend mindestens einen Sensor zur Erfassung mindestens eines Istwerts des mindestens einen Lenkwinkels, wobei die mindestens eine Steuereinrichtung so konfiguriert ist, dass das Verhältnis des Anteils, in dem der mindestens eine Lenkaktor der ersten Gattung auf den Lenkwinkel einwirkt, zu dem Anteil, in dem der mindestens eine Lenkaktor der zweiten Gattung auf den Lenkwinkel einwirkt, von einer Abweichung des Istwerts des mindestens einen Lenkwinkels von einem entsprechenden Sollwert abhängt.

12. Steuereinrichtung für ein Steer-by-Wire-System, die konfiguriert ist, Lenksignale zu empfangen und auf Grundlage dieser Lenksignale mindestens einen Lenkaktors einer ersten Gattung und mindestens einen Lenkaktors einer zweiten Gattung anzusteuern, wobei sich die zweite Gattung von der ersten Gattung unterscheidet.

13. Verfahren zur Einstellung mindestens eines Lenkwinkels mindestens eines Rads eines Kraftfahrzeugs mittels eines Steer-by-Wire-Systems, umfassend die Schritte:
Bereitstellen von Lenksignalen,
Ansteuern mindestens eines Lenkaktors einer ersten Gattung und mindestens eines Lenkaktors einer zweiten Gattung auf Grundlage der Lenksignale, wobei sich die zweite Gattung von der ersten Gattung unterscheidet.
